**Europäisches Patentamt**

**European Patent Office**

**Office européen des brevets**

(11) Veröffentlichungsnummer : **0 163 887**
**B1**

(12) **EUROPÄISCHE PATENTSCHRIFT**

(45) Veröffentlichungstag der Patentschrift :
02.03.88

(21) Anmeldenummer : **85104822.3**

(22) Anmeldetag : **20.04.85**

(51) Int. Cl.⁴ : **G 11 B 23/087**

(54) **Lichtkanalabdeckung für eine Endabschaltvorrichtung eines Kassettenmagnetbandes.**

(30) Priorität : **04.05.84 DE 3416481**

(43) Veröffentlichungstag der Anmeldung :
**11.12.85 Patentblatt 85/50**

(45) Bekanntmachung des Hinweises auf die Patenterteilung : **02.03.88 Patentblatt 88/09**

(84) Benannte Vertragsstaaten :
**DE FR GB IT NL**

(56) Entgegenhaltungen :
**DE-A- 2 656 199**
**DE-A- 3 307 159**
**GB-A- 2 061 226**
**GB-A- 2 119 751**
**PATENT ABSTRACTS OF JAPAN, Band 7, Nr. 117, 21.**
**Mai 1983, Seite (P-198) (1262)**

(73) Patentinhaber : **Agfa-Gevaert AG**
**Patentabteilung**
**D-5090 Leverkusen 1 (DE)**

(72) Erfinder : **Pertzsch, Albert, Dipl.-Ing.**
**Leutstettner Strasse 29**
**D-8000 München 71 (DE)**
Erfinder : **Liepold, August**
**Kaltner Weg 12**
**D-8000 München 70 (DE)**
Erfinder : **Brunner, Hubert**
**Mühlgasse 4a**
**D-8911 Weil (DE)**
Erfinder : **Zeroni, Ludwig**
**Nelkenstrasse 40**
**D-8012 Ottobrunn (DE)**

Jouve, 18, rue St-Denis, 75001 Paris, France

## Beschreibung

Magnetbandkassette mit einer Lichtkanalabdeckung für eine Endabschaltvorrichtung eines Kassettenmagnetbandes.

Die Erfindung betrifft eine Magnetbandkassette, welche staubsichere Abdeckung der Lichtkanäle für die Endabschaltung eines Kassettenmagnetbandes mit transparentem Vor- und Nachlauf insbesondere für Videosysteme enthält.

Magnetbandkassetten für Videosysteme enthalten ein lichtundurchlässiges Magnetband mit einem transparenten Vor- und Nachlaufband. Die Abschaltung des Bandlaufes nach Umspulung erfolgt beim Wechsel des Magnetbandes zum transparenten Nachlaufband mit Hilfe von Licht. Dazu wird, wie in DE-A-26 56 199 beschrieben, eine Lampe zwischen den beiden Bandspulen durch einen Lichtschacht in der unteren Kassettenhälfte eingeführt. Diese Öffnung ist umgrenzt von einem zylindrischen Rand mit zwei Lichtkanälen nach den Schmalseiten der Kassette hin, an denen ebenfalls Fenster angeordnet sind. Im Recorder sind auf den Verlängerungen der Verbindungslinien von Lampe, Lichtkanäle, Fenster in der Kassette geräteseitig lichtempfangende Elemente wie Fotozellen angeordnet. Beim Übergang vom lichtundurchlässigen Band zum transparenten Nachlauf trifft der Lichtstrahl die Fotozelle und der Bandlauf wird gestoppt. Durch den Lichtschacht am Boden der Kassette und die seitlich angeordneten Lichtkanälen, die rechteckige Aussparungen am oberen Rand des Lichtschachtes sind, kann Staub eindringen und das Band verschmutzen. Bei einem kleineren Videokassettensystem ist bereits von der Konstruktion her auf bessere Staubabdichtung gesorgt indem das Band in Ruhestellung innerhalb einer doppelwandigen Frontklappe verläuft.

Zutritt von Staub besteht aber immer noch im Bereich des Lampenschachtes. Bei diesen Kassettentypen hat man schon versucht, rohrförmige oder topfförmige Spritzteile auf den Lampenschacht aufzusetzen. Derartige Teile sind relativ teuer, bei topfförmigen Teilen kann das Einführen der Lampe behindert werden, wenn z. B. der Topf falsch, das heißt mit dem Boden nach unten auf den Lampenschacht aufgesetzt wird. Diese kaufmännischen und verarbeitungstechnischen Nachteile lassen sich erfindungsgemäß vermeiden durch eine Magnetbandkassette gemäß den Ansprüchen 1 oder 2 mit den im kennzeichnenden Teil der Ansprüche aufgeführten Merkmalen. Weitere Details der Erfindung sind in der Beschreibung und in den Unteransprüchen wiedergegeben.

Im nachstehenden wird die Erfindung anhand von Zeichnungen näher erläutert und zwar zeigen.

Figur 1 die Aufsicht auf eine Videokassette mit Durchbruch im Bereich des Lichtschachtes und der vorderen Schmalseiten der Kassette.

Figur 2 eine perspektivische Ansicht des Lichtschachtes im Kassettenunterteil mit eingesteckter Folie gemäß der Erfindung.

Figur 3 eine geschnittene Ansicht des zweigeteilten Lichtschachtes mit Abstufungen und Folieneinsatz.

Figur 4 eine perspektivische Ansicht des Lichtschachtes gemäß Figur 2 mit verlängerter Rückwand.

Figur 5 eine geschnittene Ansicht des unterteilten Lichtschachtes gemäß Figur 3/4 mit einer zusätzlichen Schraubenführung.

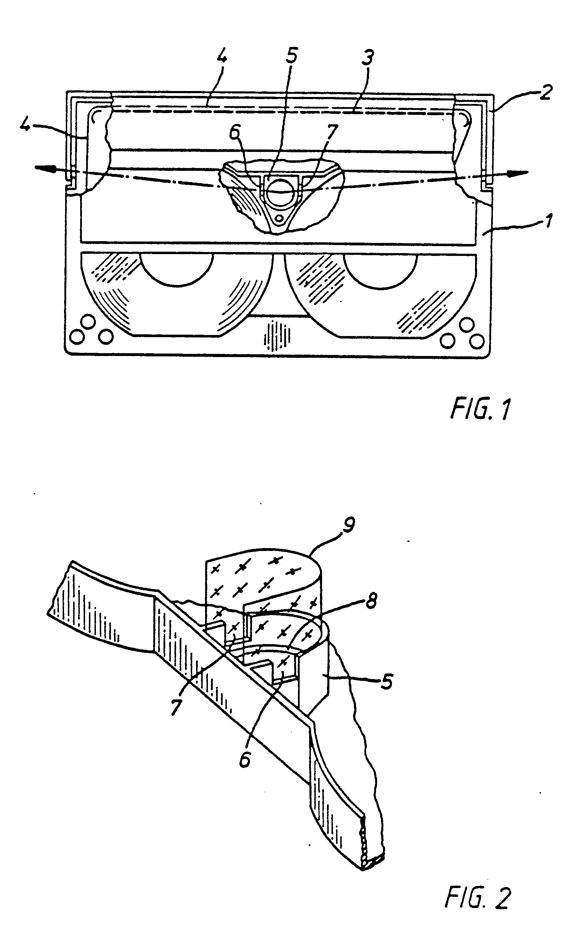

In Figur 1 ist die Aufsicht einer Videominiaturkassette (1) mit doppelwandiger Frontklappe (2, 3) dargestellt. Zwischen der Innen- und Außenwand der Frontklappe verläuft das Magnetband (4) in Ruhestellung der Kassette. Von der Vorderseite oder der Rückseite ist damit das Band in diesem Bereich gegen Staub gesichert. Eindringen kann Staub immer noch über den nach unten offenen Lampenschacht (5) und über die Lichtkanäle (6, 7), die rechteckige Aussparungen am Lampenschacht sind, in das Kasseteninnere mit den Bandwickeln. Der Lampenschacht ist angespritzt an das Kassettengehäuse und somit aus demselben Kunststoffmaterial. Dies zu verhindern, ist gemäß der Erfindung im einfachsten Fall der einzige Lampenschacht im Kassettenunterteil unterhalb der Lichtkanäle mit einer umlaufenden Abstufung (8) vorgesehen, auf der ein mindestens im Bereich der Lichtkanäle transparentes, rechteckiges biegsames Folienstück (9) aufsitzt (Figur 2). Der Lampenschacht ist U-förming ausgebildet wobei sein kreisbogenförmiger Teil zum Kasseteninneren gerichtet ist und sein zur Frontklappe gerichtetes Teil rechteckig abgeschlossen ist. Dadurch kann sich das Folienstück mit seinem gebogenen Teil an dem kreisförmigen Teil und mit seinen Enden am rechteckigen Abschluß des Lampenschachtes abstützen. Diese Stütze gibt soviel Stabilität, daß das Folienstück in der Vertikale bis zur Innenseite des Kassettenoberteils reichen kann und so das Kasseteninnere gegenüber dem Lampenschacht abdichtet. Da das Licht nu über die Lichtkanäle auf die lichtempfangenden Elemente austreten darf, ist es bei dieser Ausführung erforderlich, den Bereich der Folie über den Lichtkanälen einzufärben.

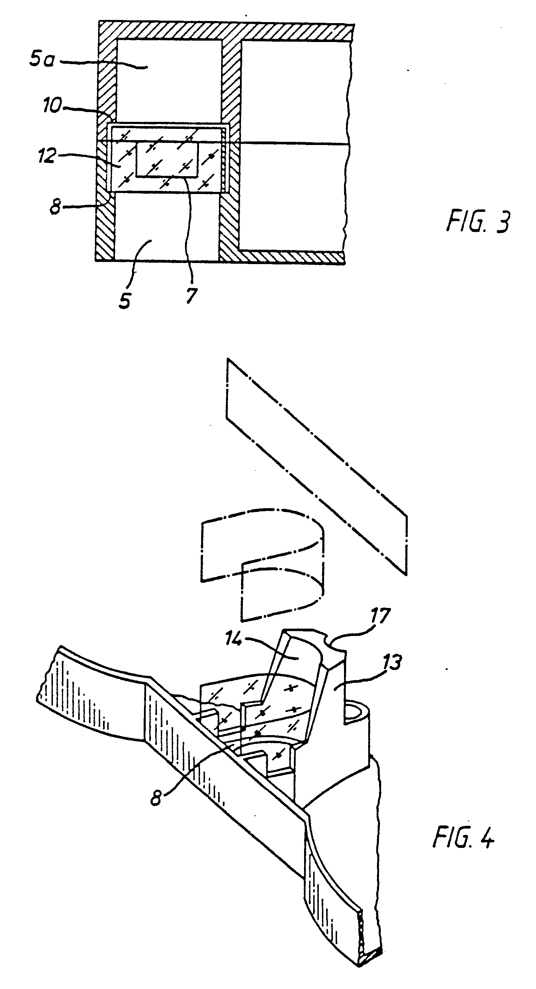

In einer weiteren Ausführung des Erfindungsgegenstandes ist der Lampenschacht durchgehen vom Boden des Kassettenunterteils bis zum Boden des Kassettenoberteils, jedoch mittig geteilt, wie (Figur 3), d. h. sowohl im unteren wie im oberen Teil des Kassettengehäuses befindet sich je eine Hälfte des Lampenschachtes 5, 5 a. Außerhalb des Bereichs der Lichtkanäle ist je eine umlaufende Abstufung 8, 10, zwischen denen ein biegsames Folienstück 12 eingesetzt ist, das durch die Stufung im Lampenschacht des Kassettenoberteils niedergehalten wird. Für die Ausführung ist es unwesentlich, ob die Lichtkanäle nur im unteren Lampenschacht vorgesehen sind, wie in Fig. 2 gezeigt, oder die ausgesparten Lichtkanäle hälftig auf den unteren und oberen Lampenschacht verteilt sind. Wichtig ist nur, daß die Anordnung derselben derart erfolgt, daß die durch die Lichtkanäle austretenden Lichtstrahlen, die geräteseitig angeordneten Fotozellen treffen. Bei dieser Ausführung kann eine durchgehend transparente Folie verwendet werden, da durch den Einsatz von zwei Lichtschächten der Durchtritt der Lichtstrahlen auf den Bereich der Lichtkanäle beschränkt ist. Die Verwendung eines biegsamen Folienstückes ist deshalb von Vorteil gegenüber gespritzen Röllchen und Töpfen, weil es in der gewünschten Länge von der Rolle geschnitten werden kann, und durch Biegen beispielsweise mit Hilfe eines Greifarms einsetzbar ist. Als Material für die Folie kommt PVC, Polyester und ähnliche Kunststoffe in Frage. Die Dicke der Folie beträgt etwa 0,1 mm. Die Kosten eines solchen Folienstückes sind außerdem wesentlich billiger.

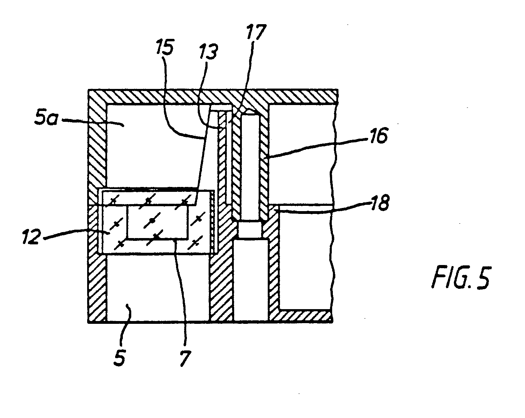

In einer weiteren Ausführung der Erfindung (Fig. 4) kann die Rückwand 13 des unteren Lampenschachtes verlängert werden bis an den Innenboden des Kassettenoberteils und auf der Innenseite als schräg verlaufende Hohlkehle 14 ausgebildet sein. Dadurch wird das Einführen des gebogenen Folienstückes erleichtert, in dem es in der Hohlkehle bis zur Abstufung 8 gleiten kann. Bei dieser Ausführung ist der obere Lampenschacht im Bereich der Verlängerung ausgespart und hinterschnitten 15, so daß sich beide Lampenschächte komplementär ergänzen (Fig. 5).

Da die Kassette in der Nähe des Lampenschachtes verschiedentlich zusätzlich verschraubt wird, kann durch die erfindungsgemäße Konstruktion der Lampenschächte, an deren Rückseite eine Führung für die Verschraubung miteinbezogen werden. Dazu wird am Innenboden des Kassettenoberteils ein Schraubendom 16 angespritzt, der in eine ringförmige Aufnahme 18 - am Boden des Kassettenunterteils angespritzt - eingreift. Beim Aufsetzen des Kassettenoberteils auf das Unterteil gleitet der Schraubendom entlang einer Rille 17 auf der Rückseite des verlängerten Lampenschachts in die Aufnahme. Durch diese Konstruktion wird ein paßgerechtes Zusammensetzen von Kassettenunter- und -oberteil erzielt.

**Patentansprüche**

1. Magnetbandkassette, geeignet zum Einsetzen in einen Recorder mit Endabschaltung mittels einer Lampe sowie lichtempfangender Elemente, bestehend aus einem Kassettenober- und -unterteil, einem im Kassetteninneren auf- und abspulbar gewickelten Magnetband mit transparentem Vor- und Nachlauf, wobei die Kassette eine Endabschaltungsvorrichtung besitzt, bestehend aus einem einteiligen Lampenschacht zur Aufnahme einer durch ein Loch im Kassettenunterteil hereinragenden Lampe und vom Lampenschacht in Richtung der lichtempfangenden Elemente ausgehende Lichtkanäle, welche gegen Staub abdeckbar sind, gekennzeichnet durch
— einen im Kassettenunterteil befindlichen U-förmigen Lampenschacht (5), dessen kreisbogenförmiger teil zum Kassetteninneren gerichtet ist und dessen zum vorderen Teil der Kassette gerichteter Teil rechteckig abgeschlossen ist
— eine im Lampenschacht (5) unterhalb der Lichtkanäle (6, 7) befindliche umlaufende Abstufung (8)
— ein biegsames Folienstück (9), welches gleichzeitig beide Lichtkanäle abdeckt, welches auf der Abstufung aufsitzt, sich mit seinem gebogenen Teil an dem kreisbogenförmigen Teil und mit seinen Enden am rechteckigen Abschluß des Lampenschachtes abstützt sowie mindestens im Bereich der Lichtkanäle transparent ist.

2. Magnetbandkassette, geeignet zum Einsetzen in einen Recorder mit Endabschaltung mittels einer Lampe sowie lichtempfangender Elemente, bestehend aus einem Kassettenober- und -unterteil, einem im Innenraum des Kassettengehäuses auf- und abspulbar gewickelten Magnetband mit transparentem Vor- und Nachlauf, wobei die Kassette eine Endabschaltungsvorrichtung besitzt, bestehend aus einem zweiteiligen Lampenschacht zur Aufnahme einer durch ein Loch im Kassettenunterteil hereinragenden Lampe und vom Lampenschacht in Richtung der lichtempfangenden Elemente ausgehende Lichtkanäle, welche gegen Staub abdeckbar sind, gekennzeichnet durch
— einen die Höhe des Innenraumes des Kassettengehäuses ausfüllenden mittig geteilten U-förmigen Lampenschacht, dessen kreisbogenförmiges Teil zum Kassetteninneren gerichtet ist und dessen zum vorderen Teil der Kassette gerichteter Teil rechteckig abgeschlossen ist
— je eine im unteren und oberen Teil (5, 5 a) des Lampenschachtes außerhalb des Bereichs der Lichtkanäle (6, 7) umlaufende Abstufung (8, 10)
— ein biegsames Folienstück (9), welches gleichzeitig beide Lichtkanäle abdeckt, welches zwischen den Abstufungen einsetzbar ist, sich mit seinem gebogenen Teil an dem kreisförmigen Teil und mit seinen Enden am rechteckigen Abschluß des Lampenschachts abstützt sowie mindestens im Bereich der Lichtkanäle transparent ist.

3. Magnetbandkassette nach Anspruch 2 dadurch gekennzeichnet, daß der zum Kassetteninneren gerichtete kreisbogenförmige Teil des unteren Lampenschachtes bis nahe zum Boden des Oberteils des Kassettengehäuses verlängert 13 ist und dessen Innenseite als schräg verlaufende Hohlkehle 14 und der teilzylindrische Lampenschacht des Oberteils 15 komplementär dazu ausgebildet ist.

4. Magnetbandkassette nach Anspruch 3 dadurch gekennzeichnet, daß am Boden des Kassettenoberteils ein Schraubendom 16 angesetzt ist, der in die Führung 18 des Schraubendoms an der Rückseite des unteren Lampenschachtes eingreift, wobei die Rückseite der Verlängerung des unteren Lampenschachtes als konkave Gleitfläche für den Schraubendom ausgebildet ist.

**Claims**

1. Magnetic tape cassette suitable for insertion in a recorder in which the run of the tape is switched off at the end thereof by means of a lamp and light-receiving elements, consisting of an upper and a lower cassette section, a magnetic tape which has a transparent lead-on and lead-off and is wound in the inside of the cassette in such a manner that it can be wound on and off, the cassette having an end switch-off device, consisting of a one-piece lamp shaft for receiving a lamp which projects into the interior through a hole in the lower cassette section and light channels which emanate from the lamp shaft in the direction of the light-receiving elements and can be covered to prevent the entrance of dust, characterised by

— a U-shaped lamp shaft (5) located in the lower cassette section, the arc-shaped part of which is directed towards the inside of the cassette and the part of which directed towards the front part of the cassette has a rectangular end,

— an encircling ledge (8) located in the lamp shaft (5) beneath the light channels (6, 7) and

— a flexible piece of film (9) which covers both light channels at the same time, which rests on the ledge, leans against the arc-shaped part with its curved part and against the rectangular end of the lamp shaft with its ends and is transparent at least in the region of the light channels.

2. Magnetic tape cassette suitable for insertion in a recorder in which the run of the tape is switched off at the end thereof by means of a lamp and light-receiving elements, consisting of an upper and a lower cassette section, a magnetic tape which has a transparent lead-on and lead-off and is wound in the inner chamber of the cassette housing in such a manner that it can be wound on and off, the cassette having an end switch-off device, consisting of a two-part lamp shaft for receiving a lamp projecting into the interior through a hole in the lower cassette section and light channels which emanate from the lamp shaft in the direction of the light-receiving elements and can be covered to prevent the entrance of dust, characterised by

— a U-shapped lamp shaft which is divided in the middle and fills out the height of the inner chamber of the cassette housing, the arc-shaped part of which is directed towards the inside of the cassette and the part of which directed towards the front part of the cassette has a rectangular end,

— one ledge (8) in the lower (5) and one (10) in the upper (5 a) part of the lamp shaft, which ledges encircle the shaft outside the region of the light channels (6, 7), and

— a flexible piece of film (9), which covers both light channels at the same time, which can be inserted between the ledges, leans against the circular part with its curved part and against the rectangular end of the lamp shaft with its ends and is transparent at least in the region of the light channels.

3. Magnetic tape cassette according to Claim 2, characterised in that the arc-shaped part of the lower lamp shaft directed towards the inside of the cassette is prolonged 13 almost to the base of the upper section of the cassette housing and the inner side of which is shaped in the form of an inclined flute 14 and the partially cylindrical lamp shaft of the upper section 15 is designed in a complementary manner thereto.

4. Magnetic tape cassette according to Claim 3, characterised in that a screw seat 16 is attached to the base of the upper cassette section, which seat enters into the passage 18 for the screw seat on the rear side of the lower lamp shaft, the rear side of the prolongation of the lower lamp shaft being in the form of a concave sliding surface for the screw seat.

**Revendications**

1. Cassette à bande magnétique destinée à être insérée dans un magnétoscope avec arrêt en fin de bande au moyen d'une lampe et d'éléments capteurs de lumière, comportant une partie supérieure et une partie inférieure de cassette, une bande magnétique pouvant être bobinée et déroulée à l'intérieur de la cassette avec bandes-amorces transparentes de début et de fin de bande, la cassette présentant un dispositif d'arrêt en fin de bande constitué d'un puits de lampe en une partie destiné à recevoir une lampe pénétrant par un trou dans la partie inférieure de la cassette èt des canaux de lumière partant du puits de lampe en direction des éléments capteurs de lumière, qui peuvent être protégés contre la poussière, caractérisée par :

— un puits de lampe (5) en forme de U se trouvant dans la partie inférieure de la cassette dont la partie en arc de cercle est dirigée vers l'intérieur de la cassette et dont la partie dirigée vers la partie avant de la cassette est obturée par un rectangle,

— un gradin (8) continu se trouvant dans le puits de lampe (5) au-dessous des canaux de lumière (6, 7),

— un morceau de feuille plastique souple (9) qui recouvre en même temps les deux canaux de lumière, qui repose sur le gradin, prend appui par sa partie courbée contre la partie en arc de cercle et par ses extrémités contre l'obturation rectangulaire du puits de lampe et est transparent tout au moins dans la zone des canaux de lumière.

2. Cassette à bande magnétique destinée à être insérée dans un magnétoscope avec arrêt en fin de bande au moyen d'une lampe et d'éléments capteurs de lumière, comportant une partie supérieure et une partie inférieure de cassette, une bande magnétique pouvant être bobinée et déroulée à l'intérieur de la cassette avec bandes-amorces transparentes de début et de fin de bande, la cassette présentant un dispositif d'arrêt en fin de bande constitué d'un puits de lampe en deux parties destiné à recevoir une lampe pénétrant par un trou dans la partie inférieure de la cassette et des canaux de lumière partant du puits de lampe en direction des éléments capteurs de lumière, qui peuvent être protégés contre la poussière, caractérisée par :

— un puits de lampe en forme de U, partagé en son milieu, remplissant la hauteur du volume intérieur du boîtier de la cassette, dont la partie en forme d'arc de cercle est dirigée vers l'intérieur de la cassette et dont la partie dirigée vers la partie avant de la cassette est obturée par un rectangle,

— un gradin (8, 10) continu respectivement dans chacune des partie inférieure et partie supérieure (5, 5 a), du puits de lampe, à l'extérieur de la zone des canaux de lumière (6, 7),

— un morceau de feuille plastique souple (9), qui obture en même temps les deux canaux de lumière, qui peut être inséré entre les gradins, prend appui par sa partie courbée contre la partie circulaire et par ses extrémités contre l'obturation rectangulaire du puits de lampe et est transparent tout au moins dans la zone des canaux de lumière.

3. Cassette à bande magnétique selon la revendication 2, caractérisée en ce que la partie en forme d'arc de cercle du puits inférieur de lampe, dirigée vers l'intérieur de la cassette, est prolongée (13) jusqu'à proximité du fond de la partie supérieure du boîtier de la cassette et sa face intérieure a la forme d'une gorge (14) s'étendant obliquement et est complémentaire du puits de lampe partiellement cylindrique de la partie supérieure (15).

4. Cassette à bande magnétique selon la revendication 3, caractérisée en ce qu'un bossage de vis (16), prévu au fond de la partie supérieure de la cassette, pénètre dans le guidage (18) du bossage de vis sur la face arrière du puits inférieur de lampes, la face arrière du prolongement du puits inférieur de lampes servant de surface de glissement concave au bossage de vis.

FIG. 1

FIG. 2

0 163 887

FIG. 3

FIG. 4

2

FIG. 5